# EUROPEAN PATENT APPLICATION

(11) **EP 0 976 435 A1**
(43) Date of publication of application: **02.02.2000**
(21) Application number: 99305845.2
(22) Date of filing: 23.07.1999
(51) Int. Cl.: B01D 19/04, C11D 3/00

(54) **Foam control agents**

(30) Priority: 29.07.1998 GB 9816377
(71) Applicant: Dow Corning Corporation, Midland, Michigan 48611 (US); DOW CORNING S.A., B-7180 Seneffe (BE)
(72) Inventor: Hoogland, Jan Sybren, 1170 Brussels (BE); Sawicki, George, Penarth, South Glamorgan (GB)
(74) Representative: Vandamme, Luc Johan Roger

(57) **Abstract**

A foam control agent comprising a silicone antifoam and a dicarboxylic acid having the formula HOOCCH(R) (CH(R'))ₙCOOH wherein R is a hydrocarbon group, R' is selected from the group consisting of hydrogen and a hydrocarbon group and n is an integer having a value of from 1 to 6. The weight ratio of silicone antifoam to dicarboxylic acid is preferably from 500:1 to 10:1. Also disclosed is a detergent composition to which has been added a foam control agent as described above.

## Description

This invention relates to a foam control agent for detergent compositions and more particularly to a foam control agent comprising a silicone antifoam and a dicarboxylic acid.

Detergent compositions used, for example in washing applications, contain surfactants which promote the production of foam during a washing process. The amount of foam produced when detergent compositions are agitated, as found during a washing process, can be excessive which can have detrimental effect upon the cleaning efficiency of the detergent composition. It is therefore desirable to control the amount of foam generated and generally foam control agents are added to the detergent composition for this purpose. Silicone antifoams are well known in the art as foam control agents and many patent specifications describe the use of such antifoams in detergent compositions.

There is a trend in the detergent industry towards the use of increased levels of surfactants in detergent compositions, for example, as found in heavy duty liquid detergent compositions. As a consequence, these heavy duty liquid detergent compositions produce a higher level of foam than conventional detergent compositions and therefore require the addition of higher levels of foam control agent. However the increased percentage of foam control agent in the detergent compositions can, for example, increase the cost and affect the overall cleaning properties of the detergent. There is therefore a desire to provide a more effective foam control agent which would reduce the need for an increased level of the agent in the detergent composition.

There are a number of patent specifications which describe attempts to solve the problem of foam control for detergent compositions and in particular compositions with high surfactant content. For example, the use of carboxylated poly(oxyalkylated) surfactants, short chain length amine surfactants or mixtures of different fatty acids in conjunction with silicone antifoams to give an improved foam control agent is disclosed in CA 2144781, EP 593841, EP 709451 and EP 798370. For example, EP Application 593841 describes a suds suppressing system for detergent compositions which comprises a mixture of a silicone oil, or mixture thereof, with a 2-alkyl alcanol, or mixtures thereof.

Prior art solutions can require the use of at least one additional component in the detergent composition which subsequently may affect both the cost and cleaning characteristics of the detergent. There is therefore a need to provide an improved foam control agent suitable for use in detergent compositions and in particular heavy duty compositions which avoids the need for higher concentrations of silicone antifoams and which utilises standard detergent components.

We have found that the use of certain dicarboxylic acids in combination with silicone antifoams enhances the ability of silicone antifoams to control foam formation.

According to the invention there is provided a foam control agent comprising a silicone antifoam and a dicarboxylic acid having the formula HOOCCH(R) (CH(R'))ₙCOOH wherein R is a hydrocarbon group, R' is a hydrogen or hydrocarbon group and n is an integer having a value of from 1 to 6.

Silicone antifoams and dicarboxylic acids are known as described below. Succinic acids as builders in detergent compositions are known, as found in EP 709451, however we have found that a range of dicarboxylic acids may be used in combination with silicone antifoams to give an improvement of foam control.

Silicone antifoams useful in a foam control agent according to the present invention are well known in the art and have been described in many publications. The silicone antifoam comprises a liquid organopolysiloxane polymer.

Liquid organopolysiloxane polymers which are useful in silicone antifoams are well known and have also been described in many patent specifications. Full description of all options is therefore not included but additional details can be found in many publications, including EP Application 578424. The polymers are preferably linear or branched having a structure according to the general formula (I). 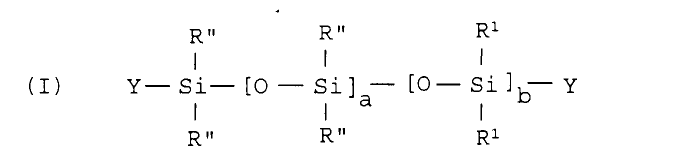 In formula (I), R" denotes a monovalent hydrocarbon group having from 1 to 35 carbon atoms, preferably 1 to 8 carbon atoms, more preferably 1 to 4 carbon atoms and most preferably a methyl group, R¹ denotes a group R", a hydroxyl group or a group according to the general formula (II). 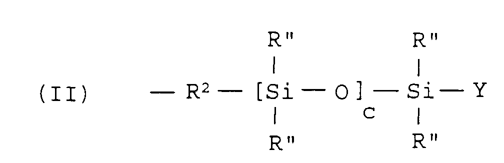 wherein R² denotes a divalent hydrocarbon, hydrocarbonoxy, siloxane group or oxygen and Y denotes a group R" or a hydroxyl group, a, b and c have a value of 0 or an integer, provided at least one of a and b is an integer and the total of a+b+c has a value such that the viscosity of the organopolysiloxane polymer at 25°C is at least 50 mm²/s, preferably at least 500 mm²/s. In the case where the organopolysiloxane polymers are linear, R¹ denotes R" or a hydroxyl group. It is preferred for the linear organopolysiloxanes that Y denotes a group R" and that b = 0. More preferred are those linear polymers wherein at least 80% of all R" groups denote an alkyl group having from 1 to 4 carbon atoms, most preferably methyl. It is most preferred that the linear organopolysiloxanes are trimethylsiloxy end-blocked polydimethylsiloxanes. The preferred viscosity of the organopolysiloxanes is from 500 to 100,000 mm²/s and more preferably 1000 to 60,000 mm²/s at 25°C.

Preferably the liquid organopolysiloxanes are branched or higher viscosity siloxanes (i.e. above 12,500 mm²/s at 25°C). In the case where the organopolysiloxanes have branching in the siloxane chain, the polymers preferably have a structure according to Formula (I), wherein b has a value of at least 1 and R² is preferably a divalent siloxane group or an oxygen atom. Particularly preferred siloxane groups R² are small three-dimensional siloxane resin particles which may have a number of pending siloxane polymer units. Branched siloxanes are known and examples of them have been described together with a method of making them in a number of patent specifications, e.g. GB 639 673, EP 31 532, EP 217 501, EP 273 448, DE 38 05 661 and GB 2 257 709.

Examples of organopolysiloxanes suitable for use in a foam control agent according to the invention include dimethylpolysiloxanes, diethylpolysiloxanes, phenylmethylpolysiloxanes, and preferably the organopolysiloxane is trimethylsiloxy endblocked polydimethylsiloxane.

The silicone antifoams can additionally comprise other components such as filler materials. Suitable filler materials are well known to a person skilled in the art and are described in many publications including for example, US 4072621. The fillers are generally finely divided particulate materials and include silica, fumed TiO₂, Al₂O₃, zinc oxide, magnesium oxide, silicone resins, for example, alkylated silicone resins, salts of aliphatic carboxylic acids, reaction products of isocyanates with certain materials e.g. cyclohexylamine, alkyl amides, for example, ethylene or methylene bis stearamide.

The most preferred fillers are silica particles with a surface area of at least 50m²/g as measured by BET. Suitable silica particles may be made according to any of the standard manufacturing techniques, for example, thermal decomposition of a silicon halide, decomposition and precipitation of a metal salt of silicic acid, e.g. sodium silicate and a gel formation method. Suitable silicas for use in the silicone antifoams include, fumed silica, precipitated silica and gel formation silica. The average particle size of the fillers preferably range from 0.1 to 20 micrometers, more preferably 0.25 to 10 micrometers and most preferably 0.5 to 5 micrometers.

Preferably the surface of the filler is rendered hydrophobic, and this can be effected by treatment of the filler particles with treating agents, e.g. reactive silanes or siloxanes, for example, dimethyldichlorosilane, trimethylchlorosilane, hexamethyldisilazane, hydroxyl end-blocked and methyl end-blocked polydimethylsiloxanes, siloxane resins, fatty acids or a mixture of one or more of these. Fillers which have already been treated with such compounds are commercially available from many companies, e.g. from Degussa. The surface of the filler may be rendered hydrophobic prior to the addition of the filler to the organopolysiloxane. Alternatively the filler surface may be rendered hydrophobic *in situ,* i.e. after the filler has been dispersed in the liquid organopolysiloxane component. This may be effected by adding to the liquid organopolysiloxane prior to, during or after the dispersion of the filler therein, the appropriate amount of treating agent of the kind described above either in the presence of a catalyst and/or heating the mixture to a temperature above 40°C. The quantity of treating agent to be employed will depend for example on the nature of the agent and the filler and will be evident or ascertainable by those skilled in the art. Sufficient should be employed to endow the filler with at least a discernible degree of hydrophobicity. The filler particles are added to the organopolysiloxane in an amount of from 1 to 25% by weight of the antifoam, preferably from 1 to 20%, most preferably from 2 to 8%.

Dicarboxylic acids suitable for use in a foam control agent according to the invention have the general formula HOOCCH(R) (CH(R'))ₙCOOH wherein R is a hydrocarbon group, R' is a hydrogen or hydrocarbon group and n is an integer having a value of from 1 to 6. Preferably R represents an alkenyl or alkyl group, more preferably an alkenyl group, more preferably an alkenyl group having from 10 to 20 atoms and most preferably a C12-14 dodecenyl group. R' is preferably a hydrogen atom or an alkyl group and most preferably a hydrogen atom and n preferably has the value of 1. Examples of suitable dicarboxylic acids are those derived from succinic, glutaric, adipic, pimelic and sumeric acid and preferably the dicarboxylic acid is derived from succinic acid. Preferably the dicarboxylic acid is C12-14 dodecenyl succinic acid, tetradecenyl succinic acid or hexadodecenyl succinic acid with C12-14 dodecenyl succinic acid most preferred.

Methods for the synthesis of dicarboxylic acids have been well documented and can be found for example in "Organic Chemistry" Volume 1 by I.L.Finar 6^{th} Edition, Longman Scientific (1986) pages 449 to 451.

The weight ratio of dicarboxylic acid to silicone antifoam to be employed in a foam control agent according to the invention will depend on a number of factors, for example, on the nature of the silicone antifoam and dicarboxylic acid and on the amount of foam control required. Preferably the ratio of dicarboxylic acid to silicone antifoam is in the range of from 4000:1 to 0.05:1, more preferably from 1000:1 to 0.2:1 and most preferably from 500:1 to 10:1.

The invention provides in another of its aspects a detergent composition incorporating a foam control agent as described above. A detergent composition according to the invention can be liquid or non-liquid and preferably has a liquid form.

Suitable detergent components for use in the detergent composition are well known in the art and have been described in numerous publications. These components generally comprise active detergents, organic and/or inorganic builder salts and other additives and diluents.

The active detergent may comprise organic detergent surfactants of the anionic, cationic, non-ionic or amphoteric type or mixtures thereof. Suitable anionic organic detergent surfactants include alkali metal soaps of higher fatty acids, alkyl aryl sulphonates, for example sodium dodecyl benzene sulphonate, long chain (fatty) alcohol sulphates, olefin sulphates and sulphonates, sulphated monoglycerides, sulphated esters, sulphosuccinates, alkane sulphonates, phosphate esters, alkyl isoethionates, sucrose esters and fluoro-surfactants.

Suitable cationic organic detergent surfactants include alkylamine salts, quaternary ammonium salts, sulphonium salts and phosphonium salts.

Suitable non-ionic organic detergent surfactants include condensates of ethylene oxide with a long chain (fatty) alcohol or (fatty) acid, for example C14-15 alcohol condensed with 7 moles of ethylene oxide (Dobanol® 45-7), condensates of ethylene oxide with an amine or an amide, condensation products of ethylene and propylene oxides, fatty acid alkylol amide and fatty amine oxides. Suitable amphoteric organic detergent surfactants include imidazoline compounds, alkylaminoacid salts and betaines.

It is more preferred that the organic surfactants are nonionic or anionic materials preferably with a HLB value of at least 7. More preferred organic surfactants are alkyl sulphates, alkyl aryl sulphonates, alkyl sulphonates, primary alkyl ethoxylates and alkylpolyglucosides or derivatives thereof. Many of these surfactants are commercially available.

Examples of suitable building agents for use in the detergent compositions are phosphates, polyphosphates, pyrophosphates, orthophosphates, phosphonates, carboxylates, polycarboxylates, succinates, silicates, carbonates and sulphates. Other components which can be included in a detergent composition of the invention include oxygen releasing compounds such as perborates, persulphates, persilicates, perphosphates, percarbonates and other bleaching agents and alumino-silicates, for example, zeolites. Examples of organic components are antiredeposition agents such as carboxymethylcellulose, brighteners, chelating agents such as ethylene diamine tetraacetic acid and nitrilotriacetic acid, enzymes and bacteriostats. Other optional components include materials commonly found in laundry and cleaning compositions such as colorants, dyes, perfumes, corrosion inhibitors, soil suspending agents, anti-caking agents, softeners, clays, some of which may be encapsulated. Materials suitable for inclusion in detergent compositions are well known in the art and have been well documented in many textbooks.

The components of the foam control agent can be combined prior to addition to the detergent composition by for example simple mixing or the individual components of the agent can be added directly to the detergent composition. Alternatively the components of both the detergent and foam control agent may be mixed together during the manufacture of the detergent composition without the need of pre-mixing of either the detergent or foam control agent.

The amount of foam control agent to be used in a detergent composition according to the invention will depend on such factors as the required amount of foam control and the end-use application of the detergent composition. Preferably a detergent composition according to the present invention comprises from 0.005 to 2% by weight and more preferably from 0.01 to 1% and most preferably from 0.02 to 0.5% of the foam control agent.

A foam control agent according to the invention using a combination of silicone antifoam and dicarboxylic acid gives enhanced foam control performance compared with the foam control performance of the individual components of the agent. The use of a foam control agent according to the invention can therefore enable the reduction of the level of silicone antifoam required which is particularly useful for concentrated liquid detergent compositions.

The following examples are provided to illustrate the invention in conjunction with comparative examples. All parts and percentages are given by weight unless otherwise indicated.

### Examples 1 to 5 and Comparative Example 1

Heavy density liquid detergent formulations A and B1 to B5 were prepared by mechanically mixing detergent ingredients as detailed in Tables I and II. The formulations were stirred continuously until a single clear phase was obtained and then continued for a further 2 hours.

**Table I:**

| Heavy Duty Liquid Detergent Formulations | | | |
|---|---|---|---|
| Ingredients | Activity of Ingredient | Detergent A (wt/g) | Detergent B1 to B5 (wt/g) |
| Citric acid (monohydrate) | 100 | 20.0 | 20.0 |
| Ethanolamine | 100 | 30.0 | 30.0 |
| 1,2-Propanediol | 100 | 43.5 | 43.5 |
| Ethanol | 100 | 24.02 | 24.02 |
| Alkyl Fatty acid/C12-C18 | 100 | 5.0 | 5.0 |
| Fatty alkyl ether sulphate/C12-C14 | 35 | 150.0 | 150.0 |
| Fatty ethoxy alkyl sulphate/C12-C14 | 70 | 58.9 | 58.9 |
| Alkyl Ethoxylate/C12-C14 | 100 | 31.25 | 31.25 |
| Fatty alkyl glucamide/C12-C18 | 80 | 31.25 | 31.25 |
| Alkenyl succinic acid | 100 | - | 50.0 |
| De-ionised water | 100 | 136.1 | 62.3 |

**Table II:**

| Alkenyl Succinic Acids in Heavy Duty Liquid Formulations | |
|---|---|
| Formulation | Alkenyl Group |
| B1 | Dodecenyl |
| B2 | Octyldecenyl |
| B3 | Hexadecenyl |
| B4 | 50%Octadecenyl/50%Hexadecenyl |
| B5 | Tetrapropenyl |

The alkenyl succinic acids used in Heavy Duty Liquid detergent formulations B1 to B5 were prepared by reacting 1:1 mole quantities of the corresponding alkenyl succinic anhydride with water.

Detergent compositions (Examples 1 to 5 and Comparative Example 1) were formulated using Heavy Duty Liquid formulations B1 to B5 and A respectively and silicone antifoams C and D. Silicone Antifoam C comprised 63% polydimethylsiloxane, trimethylsiloxy-terminated, 31% polydimethylsiloxane, hydroxy-terminated, 3 % silicone resin and 3% hexamethyldisilazane treated silica. Silicone Antifoam D comprised 10% of Silicone Antifoam agent C. The foam profile of the detergent compositions was determined by use of the following test method.

A conventional automatic front-loading washing machine having a transparent loading door, was loaded with 3.0 kg of clean white cotton fabric. A wash cycle with a main wash (40°C) was carried out with each of the detergent formulations prepared above using a 100 ml dosage level. The door of the washing machine was marked with graduations at 10% levels from 0 to 100% of its height, where 0 indicates there is no foam present, and 100 indicates the foam is above the top of the window. The foam height during the wash cycle was recorded at 5 minute intervals with the drum of the machine stationary.

For each Heavy Duty Liquid detergent formulation, sufficient of silicone antifoams C and D were added to the Heavy Duty Liquid formulations to give detergent compositions having a standard foam profile as defined in Table III.

**Table III:**

| Standard Foam Profile | | | | | | | | | |
|---|---|---|---|---|---|---|---|---|---|
| Time (min) | 5 | 10 | 15 | 20 | 25 | 30 | 35 | 40 | 45 |
| Foam Height | 0 | 10 | 20 | 30 | 40 | 50 | 70 | 80 | 100 |

The details of the detergent compositions for Examples 1 to 5 and Comparative Example 1 are given in Table IV.

**Table IV:**

| Detergent Compositions | | |
|---|---|---|
| Example | Heavy Duty Liquid Detergent Formulations | % Silicone Antifoam C |
| 1 | B1 | 0.7 |
| 2 | B2 | 0.7 |
| 3 | B3 | 0.7 |
| 4 | B4 | 0.7 |
| 5 | B5 | 1.0 |
| Comparative Example 1 | A | 1.2 |

The results as found in Table IV indicate that there is a lower level of silicone antifoam present in the detergent compositions of Examples 1 to 5 compared with the detergent composition of Comparative Example 1. This clearly illustrates that by the use of alkenyl succinic acid in combination with a silicone antifoam, the level of silicone antifoam present in the detergent compositions can be reduced without deterioration of the foam control properties of the compositions.

### Example 6

Detergent composition B6 was formulated by directly mixing the ingredients of formulation B3 as found in Table I and a silicone emulsion comprising 10% of silicone antifoam E. Silicone antifoam E comprised polydimethylsiloxane, trimethylsiloxy terminated. 1.2 % of silicone antifoam E was required to achieve a standard foam profile as described in Table III.

### Comparative Example 2

The procedure of Example 6 was repeated using the ingredients of formulation A in place of formulation B3 (i.e. there was no alkenyl succinic acid present). 1.6 % of silicone antifoam E was required to achieve a standard foam profile.

Foam control agent according to the invention are useful in detergent compositions where foam levels need to be controlled, for example, in laundry and dishwasher detergents.

## Claims

1. A foam control agent comprising a silicone antifoam characterised in that the foam control agent comprises also a dicarboxylic acid having the formula HOOCCH(R) (CH(R'))ₙCOOH wherein R is a hydrocarbon group, R' is a hydrogen or hydrocarbon group and *n* is an integer having a value of from 1 to 6.

2. A foam control agent according to Claim 1 characterised in that R denotes an alkenyl group, R' denotes a hydrogen or alkyl group and *n* has the value of 1.

3. A foam control agent according to Claim 1 or Claim 2 characterised in that R denotes a C₁₀₋₂₀ alkenyl group and R' denotes a hydrogen atom.

4. A foam control agent according to any one of the preceding claims characterised in that the dicarboxylic acid is C₁₂₋₁₄ dodecenyl succinic acid.

5. A foam control agent according to any one of the preceding claims characterised in that the organopolysiloxane is trimethylsiloxy end-blocked polydimethylsiloxane.

6. A foam control agent according to any one of the preceding claims characterised in that the silicone antifoam additionally comprises a filler.

7. A foam control agent according to any one of the preceding claims characterised in that the weight ratio of silicone antifoam to dicarboxylic acid is from 500:1 to 10:1.

8. A detergent composition comprising a foam control agent characterised in that the foam control agent is according to any one of the preceding claims.

9. Use of an acid to improve the foam control efficiency of a silicone antifoam characterised in that the acid is a dicarboxylic acid of the formula HOOCCH(R) (CH (R'))ₙCOOH wherein R is a hydrocarbon group, R' is a hydrogen or hydrocarbon group and *n* is an integer having a value of from 1 to 6.
